# EUROPÄISCHE PATENTSCHRIFT

(11) **EP 3 538 875 B1**
(45) Veröffentlichungstag und Bekanntmachung des Hinweises auf die Patenterteilung: **01.01.2020**
(21) Anmeldenummer: 17794950.0
(22) Anmeldetag: 07.11.2017
(51) Int. Cl.: G01N 21/51, G01N 21/15, G01N 21/47

(54) **OPTISCHES MESSGERÄT**
OPTICAL MEASURING INSTRUMENT
INSTRUMENT DE MESURE OPTIQUE

(30) Priorität: 08.11.2016 DE 202016106236 U
(43) Veröffentlichungstag der Anmeldung: 18.09.2019
(73) Patentinhaber: Hach Lange GmbH, 14163 Berlin (DE)
(72) Erfinder: STEINHAUER, Frank, 12305 Berlin (DE); KLEIN, Roman, 10827 Berlin (DE); DALLJO, Robert, 12169 Berlin (DE)
(74) Vertreter: Sandri, Sandro
(86) Internationale Anmeldenummer: PCT/EP2017/078426
(87) Internationale Veröffentlichungsnummer: WO 2018/087069

(56) Entgegenhaltungen:
- EP-A1- 1 816 462
- JP-A- H07 243 964
- JP-U- S6 128 021
- SU-A1- 1 233 013
- US-A- 4 165 179

## Beschreibung

Die Erfindung bezieht sich auf ein optisches Messgerät zur quantitativen Ermittlung einer optischen Eigenschaft einer Flüssigkeitsprobe, die sich in einer transparenten Meßküvette befindet.

Das Messgerät weist hierzu eine optische Meßanordnung auf, durch die die betreffende optische Eigenschaft der Flüssigkeitsprobe in der Meßküvette bestimmt wird. Das optische Messgerät kann beispielsweise ein Fotometer oder eine Trübungsmessungs-Anordnung sein, und weist in der Regel einen optischen Sender und einen optischen Empfänger auf. Das optische Messgerät bestimmt beispielsweise die Absorption/Extinktion bei einer bestimmten Wellenlänge oder die Trübung der Flüssigkeitsprobe.

Wichtig bei optischen Messgeräten ist es, dauerhaft ein möglichst großes Verhältnis von Nutzsignal zu Störsignal sicherzustellen. Dies ist insbesondere bei der Trübungsmessung von großer Wichtigkeit, weil das Nutzsignal prinzipbedingt relativ klein ist. Daher ist eine regelmäßige Reinigung der innenseitigen Oberflächen der Meßküvette unerlässlich. Bei einem Prozess-Messgerät, das möglichst über Wochen oder Monate wartungsfrei laufen soll, erfolgt dies automatisch durch eine mechanische Reinigungsanordnung. Aus der JP H07 243964 ist eine Wasserqualitätsmeßvorrichtung offenbart, die aus einem Meßzylinder, der eine zu messende abgetastete Flüssigkeit speichert, einer Kalibrierflüssigkeits-Zuführeinrichtung zum Zuführen einer Kalibrierflüssigkeit zu dem Meßzylinder, einer außerhalb des Meßzylinders angeordneten Lichtquelle, einem außerhalb des Messzylinders angeordnetes Lichtempfangselement, das das von der Lichtquelle emittierte Licht empfängt und die Messflüssigkeit in den Messzylinder überträgt und/oder von der Messflüssigkeit gestreut wird, einer Messschaltung, die den auf dem dem Signal von dem Lichtempfangselement basierten Kennwert der Wasserqualität berechnet, einer Bürste, einer Dreh/ Bewegungseinrichtung, die die Bürste dreht und vertikal bewegt, und einer Reinigungseinrichtung zum Reinigen der Innenwand des Messzylinders, besteht.
Aus der US 4165179 ist eine Vorrichtung zum Abwischen des optischen Fensters einer Probenzelle in einem Trübungsmessgerät oder einem anderen optischen Instrument zum Untersuchen einer Flüssigkeitsprobe offenbart, wobei die Vorrichtung einen Abstreifer umfasst, der so eingerichtet ist, dass er in die Innenfläche der Probenzelle eingesetzt und um seine Achse gedreht werden kann um das optische Fenster schnell und leicht von an dem optischen Fenster anhaftendem Material zu reinigen.
Bei einem Prozess-Messgerät wird bevorzugt eine fluiddichte Meßküvette eingesetzt, durch die die Flüssigkeitsprobe zwischen einem Meßküvetten-Zulauf und -Ablauf kontinuierlich hindurchfließt. Hier wäre eine Reinigung der innenseitigen Oberflächen mit herkömmlichen Mitteln nur möglich, wenn die Meßküvette regelmäßig geöffnet wird, um mit einer Reinigungseinheit die innenseitigen Oberflächen der Meßküvette reinigen zu können. Aufgabe der Erfindung ist es demgegenüber, ein optisches Messgerät mit einer Reinigungsanordnung zu schaffen, die jederzeit und auf einfache Weise eine Reinigung der innenseitigen Oberflächen der Meßküvette erlaubt.

Diese Aufgabe wird durch ein optisches Messgerät mit den Merkmalen des Anspruchs 1 gelöst.

Das optische Messgerät weist eine transparente zylindrische Meßküvette auf, die eine axiale Symmetrieachse definiert und die die Flüssigkeitsprobe enthält. Unter einer Meßküvette wird vorliegend der Bereich eines Gefäßes verstanden, in dem die optische Messung stattfindet, der also notwendigerweise für die elektromagnetische Meßstrahlung transmissiv ist. Das optische Messgerät weist eine optische Meßanordnung zur quantitativen Ermittlung der optischen Eigenschaft der in der Meßküvette befindlichen Flüssigkeitsprobe auf. Die optische Meßanordnung ist im transparenten Bereich der Meßküvette angeordnet. Die optische Meßanordnung wird vorzugsweise von einem optischen Sender und einem optischen Empfänger gebildet. Der optische Sender sendet die Meßstrahlung, beispielsweise Licht im sichtbaren oder nicht-sichtbaren Bereich, mit einem kontinuierlichen Spektrum oder aber als monochromatisches Licht aus. Der Empfänger empfängt die von dem optischen Sender gesendete Meßstrahlung entweder direkt oder indirekt.

Das optische Messgerät weist eine mechanische Reinigungsanordnung mit berührungsloser Kraftübertragung zum Reinigen der Innenseite der Meßküvette auf. Die Reinigungsanordnung weist eine externe magnetische Arbeitsbühne und eine interne magnetische Reinigungseinheit auf, die berührungslos miteinander kraftgekoppelt sind.

Die, auf die Meßküvette bezogen, externe magnetische Arbeitsbühne ist koaxial zu der Symmetrieachse der zylindrischen Meßküvette angeordnet und umschließt die Meßküvette ringförmig. Die Meßküvette steht vorzugsweise vertikal, und die externe Arbeitsbühne ist parallel zu der Symmetrieachse translatorisch, also vorzugsweise vertikal, verschiebbar und um die koaxiale Symmetrieachse rotierbar ausgebildet. Die Arbeitsbühne weist mindestens ein Translatorik-Magnetelement und mindestens ein Rotatorik-Magnetelement auf, wobei das Translatorik-Magnetelement und das Rotatorik- Magnetelement bevorzugt separate Magnetelemente sind, und besonders bevorzugt in translatorischer Richtung zueinander beabstandet angeordnet sind. Die Beabstandung ist notwendig, um die Effizienz von ratatorischen Magnetelement und translatorischen Magnetelement zu optimieren.

Die korrespondierende interne Reinigungseinheit ist innerhalb der Meßküvette angeordnet und ist innerhalb der Meßküvette translatorisch verschiebbar sowie rotierbar. Die Reinigungseinheit ist weder translatorisch noch rotatorisch mechanisch fixiert oder im engeren Sinne geführt, sondern kräftemäßig ausschließlich berührungslos magnetisch mit der Arbeitsbühne gekoppelt. Die Bewegungen der Reinigungseinheit innerhalb der Meßküvette sind jedoch durch die Innenwände der Meßküvette radial und translatorisch begrenzt.

Die Reinigungseinheit weist einen Reinigungskörper auf, durch den die Innenseite der transparenten Meßküvette mechanisch gereinigt wird. Der Reinigungskörper kann beispielsweise ein Bürstenkopf sein, durch den sowohl der Küvettenboden als auch die zirkuläre Küvettenwand mechanisch gereinigt werden. Die Reinigungseinheit weist mindestens ein Translatorik- Magnetelement und mindestens ein Rotatorik-Magnetelement auf, wobei die Reinigungseinheit-Magnetelemente mit den entsprechenden Arbeitsbühnen-Magnetelementen derart räumlich miteinander korrespondieren und magnetisch miteinander gekoppelt sind, dass die Reinigungseinheit der Bewegung der Arbeitsbühne sowohl translatorisch als auch rotatorisch folgt. Die Magnetelemente können grundsätzlich ferromagnetisch und/oder permanentmagnetisch ausgebildet sein. Mindestens muss jedoch ein Magnetelement eines Magnetelement-Paares, das sich aus einem Magnetelement der Arbeitsbühne und einem Magnetelement der Reinigungseinheit zusammensetzt, permanentmagnetisch ausgebildet sein. Auf diese Weise wird sichergestellt, dass die magnetische Kopplung ohne elektromagnetische Energie dauerhaft hergestellt ist.

Da die Übertragung der Translatorik-Kräfte einerseits und der rotatorischen Kräfte andererseits vorzugsweise durch getrennte separate Magnetelemente erfolgt, wird eine hohe Betriebssicherheit sichergestellt, da bei einer rotatorischen Blockade der Reinigungsanordnung die translatorische magnetische Kopplung bestehen bleibt, und die Reinigungseinheit nicht herabfallen kann.

Vorzugsweise ist der Arbeitsbühne ein Rotations- Antriebsmotor zum Rotieren der Arbeitsbühne und ein Translatorik- Antriebsmotor zum axialen bzw. translatorischen Verschieben der Arbeitsbühne zugeordnet. Die beiden Antriebsmotoren sind vorzugsweise statisch angeordnet, so dass die Bewegungskräfte über entsprechende Kraftübertragungs -Mechaniken und -Mimiken von den Antriebsmotoren auf die Arbeitsbühne übertragen werden.

Gemäß einer bevorzugten Ausgestaltung treibt der Rotations-Antriebsmotor eine Kantstange an, die parallel zu der Symmetrieachse angeordnet ist und die ihrerseits ein Zahnrad antreibt, das einen in einer Querebene liegenden Zahnring der Arbeitsbühne antreibt. Das Zahnrad ist an der Kantstange in translatorischer Richtung verschiebbar ausgebildet, wobei es bevorzugt durch einen entsprechenden Mitnehmer der Arbeitsbühne stets auf der Höhe des Arbeitsbühnen-Zahnrings mitgenommen und gehalten wird. Die Kantstange kann im Querschnitt beispielsweise quadratisch ausgebildet sein, wobei das Zahnrad mittig eine entsprechende quadratische Öffnung aufweist, so dass das Zahnrad über einen Formschluss von der Kantstange rotatorisch mitgenommen wird.

Vorzugsweise treibt der Translatorik-Antriebsmotor eine Gewindestange an, die parallel zu der Symmetrieachse angeordnet ist und einen in einer Querebene liegenden Gewindering der Arbeitsbühne antreibt. Die Gewindestange kann insbesondere eine Gewindespindel sein, die ein Außen- Gewinde aufweist. Der Gewindering der Arbeitsbühne kann eine Steigung von Null aufweisen, kann jedoch auch eine Steigung größer Null aufweisen. Im ersteren Fall weist der Gewindering kein echtes Gewinde auf, sondern jeweils in einer Querebene liegende Ringzähne, die eine ringförmige Zahntange bilden, so dass die translatorische Position der Arbeitsbühne während ihrer Rotation konstant bleibt. Im zweiten Fall muss die translatorische Arbeitsbühnen- Position während der Rotation der Arbeitsbühne durch eine gleichzeitige komplementäre Kompensations-Rotation der Gewindestange ausgeglichen werden.

Vorzugsweise ist das optische Messgerät ein Trübung-Messgerät, wobei die optische Meßanordnung eine Trübung-Meßanordnung ist. Der optische Sender ist bevorzugt unterhalb des Küvettenbodens angeordnet, so dass die Meßstrahlung ungefähr in der Symmetrieachse in die Meßküvette eingespeist wird. Der optische Empfänger ist vorzugsweise seitlich der Meßküvette angeordnet, und kann beispielsweise als ringförmiger optischer Empfänger ausgebildet sein, der die gesamte in radialer Richtung innerhalb eines zirkulären Messfensters aus der Meßküvette austretende Streustrahlung empfängt.

Vorzugsweise ist mindestens eines der beiden Translatorik-Magnetelemente der Arbeitsbühne und der Reinigungseinheit geschlossen ringförmig ausgebildet. Besonders bevorzugt sind jedoch beide Translatorik-Magnetelemente, sowohl das Translatorik-Magnetelement der Arbeitsbühne als auch das der Reinigungseinheit, jeweils geschlossen ringförmig ausgebildet. Hierbei kann mit relativ preiswerten Materialien, insbesondere für das permanentmagnetische Magnetelement, eine hohe translatorische Kraft dauerhaft übertragen und sichergestellt werden. Besonders bevorzugt sind jedoch beide Translatorik-Magnetelemente sowohl geschlossen ringförmig als auch permanentmagnetisch erregt ausgebildet.

Besonders bevorzugt ist mindestens eines der beiden Translatorik-Magnetelemente in axialer bzw. translatorischer Richtung magnetisiert.

Gemäß einer bevorzugten Ausgestaltung sind jeweils mindestens zwei Rotatorik- Magnetelemente an der Arbeitsbühne und/oder der Reinigungseinheit vorgesehen. Besonders bevorzugt sind jeweils vier Rotatorik- Magnetelemente sowohl an der Arbeitsbühne als auch an der Reinigungseinheit vorgesehen. Die Rotatorik- Magnetelemente sind besonders bevorzugt radial permanentmagnetisiert. Durch eine gewisse Mindestzahl an Rotatorik- Magnetelementen wird sichergestellt, dass bei einem Durchrutschen der magnetischen rotatorischen Kupplung diese möglichst schnell wieder fasst und wieder hergestellt wird. Besonders bevorzug ist die Anzahl der Rotatorik-Magnetelemente der Arbeitsbühne bzw. der Reinigungseinheit geradzahlig.

Im Folgenden wird unter Bezugnahme auf die Zeichnungen ein Ausführungsbeispiel der Erfindung näher erläutert.

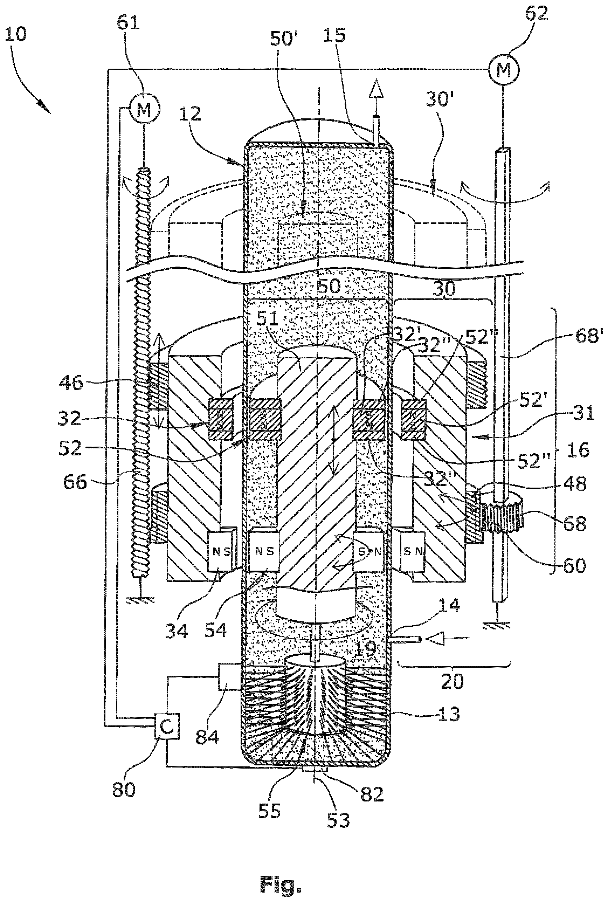

Die Zeichnung zeigt schematisch und im Längsschnitt ein optisches Trübungs-Messgerät gemäß der Erfindung.

In der Figur ist ein optisches Trübungs- Messgerät 10 dargestellt, das der Ermittlung einer optischen Eigenschaft, nämlich der Trübung einer Flüssigkeitsprobe 19 in einer zylindrischen Meßküvette 12, dient.

Die Meßküvette 12 wird von einem transparenten Küvettenkörper 13 aus Glas gebildet, der hohlzylindrisch und geschlossen bzw. fluiddicht ausgebildet ist. Die Flüssigkeitsprobe 19, beispielsweise Wasser einer Klärstufe einer Kläranlage, fließt durch einen im unteren Küvetten-Drittel angeordneten Meßküvetten-Einlass 14 in den Innenraum der Meßküvette 12 hinein und durch einen Meßküvetten-Auslass 15 am oberen Küvetten-Ende wieder heraus. Die Flüssigkeitsprobe 19 innerhalb der Meßküvette 12 kann hierbei unter einem Überdruck von mehreren Bar stehen. Die zylindrische Meßküvette 12 definiert eine axiale Symmetrieachse 53.

Das Messgerät 10 weist eine optische Meßanordnung zur quantitativen Ermittlung der optischen Eigenschaft der Flüssigkeitsprobe auf, nämlich vorliegend der Trübung. Die Meßanordnung besteht im Wesentlichen aus einem optischen Sender 82, der in der Symmetrieachse und unterhalb der vertikal stehenden Meßküvette 12 angeordnet ist, und einem optischen Empfänger 84 seitlich außerhalb der Meßküvette 12.

Das Messgerät 10 weist eine mechanische Reinigungsanordnung 16 mit berührungsloser Kraftübertragung zum Reinigen der Innenseite der Meßküvette 12 auf. Die Reinigungsanordnung 16 weist hierzu eine externe magnetische und ringförmige Arbeitsbühne 30, die koaxial zur Symmetrieachse 53 angeordnet und translatorisch parallel zu der Symmetrieachse 53 beweglich geführt ist, und eine interne magnetische Reinigungseinheit 50 auf, die innerhalb der Meßküvette 12 angeordnet ist.

Die Arbeitsbühne 30 liegt in einer Querebene und umgibt und umschließt die Meßküvette 12 ringartig von außen. Die Arbeitsbühne 30 ist sowohl translatorisch beweglich als auch um die Symmetrieachse 53 rotierbar angeordnet und gelagert. Die Arbeitsbühne 30 weist ein ringförmig geschlossenes permanentmagnetisches Translatorik-Magnetelement 32 auf, das als geschlossener Ring ausgebildet und axial magnetisiert ist. Das Translatorik-Magnetelement 32 besteht aus einem mittigen Ringmagneten 32', an den oben und unten jeweils ein magnetischer Ringkörper 32" angesetzt. Separat von dem Translatorik-Magnetelement 32 weist die Arbeitsbühne 30 vier vereinzelte Rotatorik-Magnetelemente 34 auf, die in einer Querebene und äquidistant zueinander unterhalb des Translatorik- Magnetelements 32 angeordnet sind.

Die Magnetelemente 32,34 werden von einem ferromagnetischen Arbeitsbühnen-Ringrahmen 31 an seiner radialen Innenseite gehalten. Die Arbeitsbühne 30 wird jeweils in translatorischer Richtung und rotatorisch durch eine entsprechende Antriebs-Mimik 20 bewegt, die weiter unten beschrieben wird. Die Arbeitsbühne 30 kann ferner von einem Gehäuse umgeben sein das alle Teile der Arbeitsbühne 30 hält.

Im Innenraum der Meßküvette 12 ist eine interne Reinigungseinheit 50 angeordnet, die an ihrem unteren Ende einen Reinigungskörper 55 in Form eines Bürstenkopfes aufweist, der von einem ferromagnetischen Reinigungseinheit-Grundkörper 51 gehalten wird. An dem Grundkörper 51 ist außenseitig ein ringförmiges Translatorik-Magnetelement 52 angeordnet, das permanentmagnetisch ausgebildet und axial magnetisiert ist, so dass sich die beiden Translatorik- Magnetelemente 52,32 magnetisch anziehen. Auch das Translatorik-Magnetelement 52 der Reinigungseinheit 50 besteht aus einem mittigen Ringmagneten 52' zwischen zwei ferromagnetischen Ringkörpern 52".

Unterhalb des Translatorik-Magnetelements 52 sind vier Rotatorik-Magnetelemente 54 an dem Reinigungseinheit- Grundkörper 51 fixiert, die in radialer Richtung permanentmagnetisch erregt sind und mit den korrespondierenden Rotatorik-Magnetelementen 34 der Arbeitsbühne 30 in einer Querebene liegen, so dass die Rotatorik-Magnetelemente 34,54 der Arbeitsbühne 30 einerseits und der Reinigungseinheit 50 andererseits sich anziehen. Die vier Rotatorik-Magnetelemente 34,54 können, in Umfangsrichtung betrachtet, jeweils mit abwechselnder Polarität magnetisiert sein, also Nord-Süd gefolgt von Süd-Nord.

Die Antriebs-Mimik 20 des Messgeräts 10 weist einen Rotations-Antriebsmotor 62 auf, der eine im Querschnitt quadratische Kantstange 68' antreibt, die parallel zu der Symmetrieachse 53 angeordnet ist. Auf der Kantstange 68' ist ein Zahnrad 68 drehfest und in translatorischer Richtung verschiebbar befestigt. Das Zahnrad 68 treibt einen in einer Querebene liegenden Zahnring 48 der Arbeitsbühne 30 an, der an dem Arbeitsbühnen-Ringrahmen 31 außenseitig fixiert ist. Der Zahnring 48 weist an seinem unteren Ende einen nach außen abragenden Mitnehmerring 90 auf, durch den das Zahnrad 68 vertikal gehalten und mitgenommen bzw. verschoben wird, so dass das Zahnrad 68 stets im Eingriff mit dem Zahnring 48 bleibt. Auf diese Weise lässt sich in jeder translatorischen Position der Arbeitsbühne 30 die Arbeitsbühne 30 bei entsprechendem Betrieb des Rotation-Antriebsmotos 62 drehen bzw. rotieren. Die translatorische Führung des Zahnrads 68 kann alternativ auch von einem Arbeitsbühnen-Gehäuse, nicht dargestellt, übernommen werden, das nicht drehbar aber translatorisch bewegbar ist, und alle Teile der Arbeitsbühne 30 mittelbar oder unmittelbar hält bzw. lagert.

Die Antriebs-Mimik 20 weist ferner einen Translatorik- Antriebsmotor 61 auf, der eine Gewindestange 66 antreibt, die ebenfalls parallel zu der Symmetrieachse 53 angeordnet ist. Die Gewindestange 66 ist mit einem Außengewinde relativ geringer Steigung versehen, die größer als Null ist. Die Gewindestange 66 greift ein in einen korrespondierenden Gewindering 46 der Arbeitsbühne 30, der an dem Reinigungseinheit- Grundkörper 51 außenseitig fixiert ist. Der Gewindering 46 mit der Gewindesteigung "Null" weist vorliegend kein Gewinde im engeren Sinn auf, sondern weist mehrere Ringzähne auf, deren Zahnköpfe über den gesamten Umfang jeweils in einer einzigen Querebene liegen also vorliegend eine ringförmige Zahnstange bilden. Bei Betrieb des Translatorik- Antriebsmotors 61 wird die Arbeitsbühne 30 translatorisch entsprechend bewegt, und zwar unabhängig von ihrer rotatorischen Bewegung.

Das Messgerät 10 weist eine Gerätesteuerung 80 auf, die die beiden Antriebsmotoren 61,62, sowie den Sender 82 und den Empfänger 84 der optischen Meßanordnung steuert und regelt.

Während des Messbetriebs befinden sich die Arbeitsbühne 30' und die Reinigungseinheit 50' in einer oberen Ruheposition, wie in der Figur durch die unterbrochenen Linien angedeutet. In der Ruheposition steht der Reinigungskörper 55 oberhalb des Meßküvetten- Einlasses 14. Zur Reinigung der innenseitigen Oberflächen in dem unteren Bereich der Meßküvette 12 wird der Translatorik- Antriebsmotor 61 aktiviert, so dass die Arbeitsbühne 30 und die der Arbeitsbühne 30 stets folgende Reinigungseinheit 50 nach unten bis in die translatorische Reinigungsposition verfahren wird, wie sie in der Figur dargestellt ist. Bereits während des Verfahrens nach unten wird der Rotatorik-Antriebsmotor 62 aktiviert, so dass der Reinigungskörper 55 die innenseitige Oberfläche der Meßküvette 12 mechanisch reinigt, und zwar sowohl den zylindrischen Wandteil als auch die Bodenwand der Meßküvette 12. Während der Reinigung findet kein Messbetrieb statt.

Nach Abschluss der Reinigung verfährt die Reinigungseinheit 50 wieder zurück in die Ruheposition.

## Patentansprüche

1. Optisches Messgerät (10) zur quantitativen Ermittlung einer optischen Eigenschaft einer Flüssigkeitsprobe (19), mit
einer transparenten zylindrischen Meßküvette (12), die eine axiale Symmetrieachse (53) definiert und die die Flüssigkeitsprobe (19) enthält, und einer optischen Meßanordnung zur quantitativen Ermittlung der optischen Eigenschaft der Flüssigkeitsprobe (19) in der Meßküvette (12), **dadurch gekennzeichnet, dass**
das optische Messgerät (10) eine mechanische Reinigungsanordnung (16) mit berührungsloser Kraftübertragung zum Reinigen der Innenseite der Meßküvette (12) enthält, wobei die Reinigungsanordnung (16) aufweist:
eine externe magnetische Arbeitsbühne (30), die koaxial zu der Symmetrieachse (53) angeordnet ist, parallel zu der Symmetrieachse (53) translatorisch verschiebbar und um die Symmetrieachse (53) rotierbar ist, die zylindrische Meßküvette (12) außen ringartig umgibt, und die mindestens ein Translatorik-Magnetelement (32) und mindestens ein Rotatorik-Magnetelement (34) aufweist, und
eine interne magnetische Reinigungseinheit (50), die innerhalb der Meßküvette (12) angeordnet ist, rotierbar und translatorisch verschiebbar ist, einen Reinigungskörper (55) aufweist, mindestens ein Translatorik- Magnetelement (52) aufweist und mindestens ein Rotatorik-Magnetelement (54) aufweist,
wobei die Translatorik- Magnetelemente (32,52) sowie die Rotatorik -Magnetelemente (34,54) der Arbeitsbühne (30) und der Reinigungseinheit (50) jeweils derart berührungslos und magnetisch miteinander gekoppelt sind, dass die Reinigungseinheit (50) der Arbeitsbühne (30) translatorisch und rotatorisch folgt.

2. Optisches Messgerät (10) nach Anspruch 1, wobei der Arbeitsbühne (30) ein Rotations- Antriebsmotor (62) zum Rotieren der Arbeitsbühne (30) und ein Translatorik- Antriebsmotor (61) zum axialen Verschieben der Arbeitsbühne (30) zugeordnet ist.

3. Optisches Messgerät (10) nach einem der vorangegangenen Ansprüche, das eine Kantstange (68'), die parallel zu der Symmetrieachse (53) angeordnet ist, und ein Zanhrad (68), das einen in einer Querebene liegenden Zahnring (48) der Arbeitsbühne (30) antreibt, umfasst, wobei der Rotations-Antriebsmotor (62) die Kantstange (68') und das Zahnrad (68) antreibt.

4. Optisches Messgerät (10) nach einem der vorangegangenen Ansprüche, das eine Gewindestange (66) die parallel zu der Symmetrieachse (53) angeordnet ist und einen in einer Querebene liegenden Gewindering (46) der Arbeitsbühne (30) umfasst, wobei der Translatorik-Antriebsmotor (61) die Gewindestange (66) und den Gewindering (46) antreibt.

5. Optisches Messgerät (10) nach einem der vorangegangenen Ansprüche, wobei die optische Messanordnung von einem optischen Sender (82) und einem optischen Empfänger (84) gebildet wird, die vorzugsweise eine Trübungs-Meßanordnung bilden.

6. Optisches Messgerät (10) nach einem der vorangegangenen Ansprüche, wobei mindestens eines der beiden Translatorik-Magnetelemente (32,52) der Arbeitsbühne (30) und der Reinigungseinheit (50) geschlossen ringförmig ausgebildet ist.

7. Optisches Messgerät (10) nach einem der vorangegangenen Ansprüche, wobei mindestens eines der beiden Translatorik-Magnetelemente (32,52) der Arbeitsbühne (30) und der Reinigungseinheit (50) in translatorischer Richtung magnetisiert ist.

8. Optisches Messgerät (10) nach einem der vorangegangenen Ansprüche, wobei die jeweils mindestens zwei Rotatorik-Magnetelemente (34,54) der Arbeitsbühne (30) und/oder der Reinigungseinheit (50) radial magnetisiert sind.

9. Optisches Messgerät (10) nach einem der vorangegangenen Ansprüche, wobei das Messgerät (10) ein Prozess-Messgerät (10) ist, die Meßküvette (12) fluidisch geschlossen ist und einen Meßküvetten-Zulauf (14) und einen Meßküvetten-Ablauf (15) aufweist.

## Claims

1. Optical measuring instrument (10) for quantitatively determining an optical property of a liquid sample (19), with
a transparent cylindrical measuring cuvette (12) that defines an axial symmetry axis (53) and contains the liquid sample (19), and
an optical measuring arrangement for quantitatively determining the optical property of the liquid sample (19) in the measuring cuvette (12), **characterised in that**
the optical measuring instrument (10) includes a mechanical cleaning arrangement (16) with contactless transmission of power for cleaning the inside of the measuring cuvette (12),
wherein the cleaning arrangement (16) has:
an external magnetic working platform (30), which is arranged coaxially to the symmetry axis (53), can be moved in a translational manner parallel to the symmetry axis (53) and rotated around the symmetry axis (53), surrounds the cylindrical measuring cuvette (12) on the outside in a ring-like manner, and which has at least one translational mechanism magnet element (32) and at least one rotational mechanism magnet element (34), and
an internal magnetic cleaning unit (50), which is arranged inside of the measuring cuvette (12), can be rotated and moved in a translational manner, has a cleaning body (55), has at least one translational mechanism magnet element (52) and at least one rotational mechanism magnet element (54),
wherein the translational mechanism magnet elements (32, 52) as well as the rotational mechanism magnet elements (34, 54) of the working platform (30) and the cleaning unit (50) are intercoupled, respectively, in such a contactless and magnetic manner that the cleaning unit (50) follows the working platform (30) in a translational and rotational manner.

2. Optical measuring instrument (10) according to claim 1, wherein assigned to the working platform (30) is a rotation drive motor (62) for rotating the working platform (30) and a translational mechanism drive motor (61) for moving the working platform (30) axially.

3. Optical measuring instrument (10) according to one of the preceding claims, comprising a polygonal rod (68'), which is arranged parallel to the symmetry axis (53), and a gearwheel (68), which drives an annular gear (48), being in a transversal plane, of the working platform (30), wherein the rotation drive motor (62) drives the polygonal rod (68') and the gearwheel (68).

4. Optical measuring instrument (10) according to one of the preceding claims, comprising a threaded rod (66), which is arranged parallel to the symmetry axis (53), and a threaded ring (46), being in a transversal plane, of the working platform (30), wherein the translational mechanism drive motor (61) drives the threaded rod (66) and the threaded ring (46).

5. Optical measuring instrument (10) according to one of the preceding claims, wherein the optical measuring arrangement is formed by an optical transmitter (82) and an optical receiver (84) that preferably form a turbidity measuring arrangement.

6. Optical measuring instrument (10) according to one of the preceding claims, wherein at least one of the two translational mechanism magnet elements (32, 52) of the working platform (30) and the cleaning unit (50) is formed in a closed ring-like manner.

7. Optical measuring instrument (10) according to one of the preceding claims, wherein at least one of the two translational mechanism magnet elements (32, 52) of the working platform (30) and the cleaning unit (50) is magnetised in translational direction.

8. Optical measuring instrument (10) according to one of the preceding claims, wherein the respectively at least two rotational mechanism magnet elements (34, 54) of the working platform (30) and/or cleaning unit (50) are magnetised radially.

9. Optical measuring instrument (10) according to one of the preceding claims, wherein the measuring instrument (10) is a process measuring instrument (10), the measuring cuvette (12) is fluidically closed and has a measuring cuvette inlet (14) and a measuring cuvette outlet (15).

## Revendications

1. Instrument de mesure optique (10) pour la détermination quantitative d'une propriété optique d'un échantillon de liquide (19), avec
une cuvette de mesure cylindrique transparente (12) définissant un axe de symétrie axial (53) et contenant l'échantillon de liquide (19), et
un agencement de mesure optique pour la détermination quantitative de la propriété optique de l'échantillon de liquide (19) dans la cuvette de mesure (12), **caractérisé en ce que**
l'instrument de mesure optique (10) contient un agencement de nettoyage mécanique (16) avec une transmission de puissance sans contact pour nettoyer l'intérieur de la cuvette de mesure (12),
dans lequel l'agencement de nettoyage (16) comporte:
une plate-forme de travail magnétique externe (30) qui est disposée de manière coaxiale à l'axe de symétrie (53), pouvant être déplacée en translation parallèlement à l'axe de symétrie (53) et tournée autour de l'axe de symétrie (53), entoure la cuvette de mesure cylindrique (12) extérieurement en forme d'anneau et comporte au moins un élément magnétique de translation (32) et au moins un élément magnétique de rotation (34), et
une unité de nettoyage magnétique interne (50), disposée dans la cuvette de mesure (12), pouvant tourner et se déplacer en translation, comporte un corps de nettoyage (55), comporte au moins un élément magnétique de translation (52) et comporte au moins un élément magnétique de rotation (54),
dans lequel les éléments magnétiques de translation (32, 52) et les éléments magnétiques de rotation (34,54) de la plate-forme de travail (30) et l'unité de nettoyage (50) sont respectivement couplés sans contact et magnétiquement réciproquement de telle sorte que l'unité de nettoyage (50) suit en translation et en rotation la plate-forme de travail (30).

2. Instrument de mesure optique (10) selon la revendication 1, dans lequel la plate-forme de travail (30) est associée à un moteur d'entraînement rotatif (62) pour faire tourner la plate-forme de travail (30) et à un moteur d'entraînement de translation (61) pour déplacer axialement la plate-forme de travail (30).

3. Instrument de mesure optique (10) selon l'une des revendications précédentes, comprenant une barre polygonale (68') disposée parallèlement à l'axe de symétrie (53) et un engrenage (68) entraînant une couronne dentée (48) reposant dans un plan transversal de la plate-forme de travail (30), dans lequel le moteur d'entraînement rotatif (62) entraîne la barre polygonale (68') et l'engrenage (68).

4. Instrument de mesure optique (10) selon l'une des revendications précédentes, comprenant une tige filetée (66) disposée parallèlement à l'axe de symétrie (53) et comprenant une bague filetée reposant dans un plan transversal (46) de la plate-forme de travail (30), dans lequel le moteur d'entraînement de translation (61) entraîne la tige filetée (66) et la bague filetée (46) .

5. Instrument de mesure optique (10) selon l'une des revendications précédentes, dans lequel l'agencement de mesure optique est formé par un émetteur optique (82) et un récepteur optique (84), qui forment de préférence un agencement de mesure de turbidité.

6. Instrument de mesure optique (10) selon l'une des revendications précédentes, dans lequel au moins l'un des deux éléments magnétiques de translation (32, 52) de la plate-forme de travail (30) et de l'unité de nettoyage (50) est conformé de manière annulaire fermée.

7. Instrument de mesure optique (10) selon l'une des revendications précédentes, dans lequel au moins l'un des deux éléments magnétiques de translation (32, 52) de la plate-forme de travail (30) et de l'unité de nettoyage (50) est magnétisé dans la direction de translation.

8. Instrument de mesure optique (10) selon l'une des revendications précédentes, dans lequel les au moins deux éléments magnétiques de rotation (34, 54) respectifs de la plate-forme de travail (30) et/ou de l'unité de nettoyage (50) sont magnétisés radialement.

9. Instrument de mesure optique (10) selon l'une des revendications précédentes, dans lequel l'instrument de mesure (10) est un instrument de mesure de procédé (10), la cuvette de mesure (12) est fermée de manière fluidique et comporte une entrée de la cuvette de mesure (14) et une sortie de la cuvette de mesure (15).
